Europäisches Patentamt

European Patent Office

Office européen des brevets

(19)

(11) **EP 1 009 117 A1**

(12) **EUROPEAN PATENT APPLICATION**

(43) Date of publication:
**14.06.2000 Bulletin 2000/24**

(51) Int Cl.[7]: **H04J 13/00**, H04J 11/00,
H04B 7/26

(21) Application number: **99400903.3**

(22) Date of filing: **13.04.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.12.1998 FR 9815620**

(71) Applicant: **ALCATEL**
**75008 Paris (FR)**

(72) Inventors:
• **Agin, Pascal**
**94370 Sucy en Brie (FR)**
• **Gourgue, Frédéric**
**75017 Paris (FR)**
• **Roosen, Fabienne**
**92340 Bourg la Reine (FR)**
• **Visbecq, Olivier**
**78150 le Chesnay (FR)**

(74) Representative: **El Manouni, Josiane et al**
**COMPAGNIE FINANCIERE ALCATEL**
**Dépt. Propr. Industrielle,**
**30, avenue Kléber**
**75116 Paris (FR)**

(54) **Method of matching resources required and resources allocated in a mobile radio system**

(57)    The method of matching resources required and resources allocated in a spreading code division multiple access mobile radio system is essentially characterized in that it includes allocation of one or more spreading codes, the number (J) and the length ($Q^{(j)}$) of said spreading codes, and in the case of a plurality of allocated spreading codes, the mode of distribution of the various symbols of a sequence to be spread, respectively despread, between said spreading codes being determined so that resources allocated are matched optimally to resources required.

FIG_2

## Description

The present invention is generally concerned with multiple access mobile radio systems.

In such systems radio resources are allocated dynamically to users in accordance with their requirements. In the most general case resources allocated to a user do not exactly match resources required, with the result that matching is necessary for transmission to the radio interface.

This problem arises in particular in Code Division Multiple Access (CDMA) mobile radio systems in which the radio resources consist of spreading codes.

Spreading an incoming data sequence of N symbols, denoted (d1, d2, ..., dN), using a code having a length (or spreading factor) Q, denoted $c_Q$ = (c1, c2, ..., cQ), produces a sequence of length Q.N, which can be represented as follows:

(d1.c1, d1.c2, ..., d1.cQ, d2.cl, d2.c2, ..., dN.cQ)

where d1.c1 represents the multiplication of d1 by c1.

An alternative representation of the spread sequence of length Q.N is (d1.$c_Q$, d2.$c_Q$ dN.$c_Q$) where d1.$c_Q$ represents the product of the symbol dl by the spreading code $c_Q$.

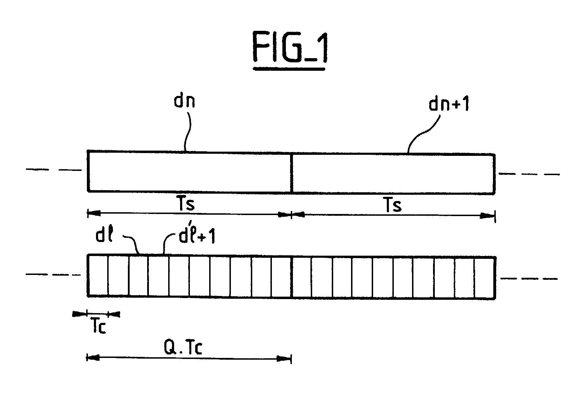

Figure 1 outlines the principle of spreading, Ts designating the basic period (or symbol period) of a non-spread sequence and Tc designating the basic period (or "chip" period) of a spread sequence, Ts and Tc being related as follows Ts = Q.Tc. In the figure dn and dn+1 correspond to two successive symbols of a non-spread incoming sequence and d'l and d'l+1 correspond to two successive basic symbols (or "chips") of the same spread symbol.

In such systems, resources allocated may not exactly match resources required, in particular because a code having the required length is not available (either because none is provided or because it has already been allocated). The problem is more serious in systems in which the bit rates to be transmitted can be different (corresponding in particular to speech, data, pictures, etc.) or vary (corresponding in particular to speech encoded with variable codes).

Various techniques for effecting such matching are known *per se:* introduction of stuffing bits, repetition or elimination of data bits (in sequences obtained after error correction encoding), using the so-called discontinuous transmission technique (whereby transmission is stopped when there is no longer any data to transmit).

The drawback of introducing stuffing bits is inefficient use of the allocated resources.

Using the discontinuous transmission technique also has the drawback of reducing transmission efficiency.

The drawback of the solution consisting in repeating or eliminating data bits is that it is only a partial solution and does not exploit all the possibilities offered by these systems.

In other words, the above matching techniques have the disadvantage of not being totally effective and/or optimized.

A particular aim of the present invention is to avoid the above drawbacks.

In one aspect the present invention consists in a method of matching resources required and resources allocated in a spreading code division multiple access mobile radio system, characterized in that it includes allocation of one or more spreading codes, the number and the length of said spreading codes, and in the case of a plurality of allocated spreading codes, the mode of distribution of the various symbols of a sequence to be spread, respectively despread, between said spreading codes being determined so that resources allocated are matched optimally to resources required.

Thus the present invention consists in a new matching technique that exploits the possibilities offered by the code division multiple access technique itself, no longer matching resources required to resources allocated, but instead matching resources allocated to resources required (nevertheless without excluding the possibility of matching resources required to resources allocated).

The present invention achieves such matching in a relatively refined manner since resources allocated are matched to resources required in terms of the symbols constituting sequences of symbols instead of in terms of the sequences themselves.

In other words, the present invention offers an additional degree of freedom compared to prior art techniques so that such matching is more efficient, better optimized and more flexible than using the prior art techniques referred to above.

In accordance with another feature, the number of spreading codes allocated is chosen to be as high as possible and/or the length of said spreading codes is chosen to be as low as possible, so as additionally to optimize transmission performance. This is of course effected within the limits of what is possible without allocating too great a proportion of the resources to a given user so as not to penalize other users.

Accordingly, resources required can be simultaneously optimized and in particular, for a given payload bit rate, more efficient error correcting coding can be used.

In accordance with another feature, the distribution mode is defined by the fraction of symbols of a sequence of symbols to be spread, respectively despread, applied to each of said spreading codes.

In accordance with another feature, the distribution mode is further defined, for given fractions of symbols, by the mode of application of the various symbols of said sequence to said spreading codes, to obtain said fractions of symbols.

In accordance with another feature, the mode of application is chosen so as additionally to optimize transmission performance.

Accordingly, and in the same manner as previously indicated, resources required can be simultaneously optimized and in particular, for a given payload bit rate, more efficient error correcting coding can be used (still within the limits of what is possible without penalizing other users).

In accordance with another feature, the parameters for fixing resources required are also determined so that resources required are matched optimally to resources allocated.

In accordance with another feature, said parameters include:

- the bit rate of payload data to be transmitted,
- the efficiency of the error correction encoding,
- the efficiency of repetition or elimination of data after error correction encoding, and
- the number of data bits transmitted per symbol.

The present invention also consists in a transmitter device for a spreading code division multiple access mobile radio system, for implementing a method of the above kind, the transmitter device being essentially characterized in that it includes spreading means using a plurality of spreading codes and means for distributing symbols from a sequence of symbols to be spread between said spreading codes in accordance with a given distribution mode, the number and the length of said spreading codes and said distribution mode being determined so that resources allocated are matched optimally to resources required.

The present invention further consists in a mobile station for spreading code division multiple access mobile radio systems including a transmitter device of the above kind.

The present invention further consists in an entity, in particular base transceiver station, for spreading code division multiple access mobile radio systems including at least one transmitter device of the above kind.

The present invention further consists in a receiver device for a spreading code division multiple access mobile radio system for implementing a method of the above kind, the receiver device being essentially characterized in that it includes despreading means using a plurality of spreading codes and means for distributing symbols from a sequence of symbols to be despread between said spreading codes, in accordance with a given distribution mode, the number and the length of said spreading codes and said distribution mode being determined so that resources allocated are matched optimally to resources required.

The present invention further consists in a mobile station for spreading code division multiple access mobile radio systems including a receiver device of the above kind.

The present invention further consists in an entity, in particular base transceiver station, for spreading code division multiple access mobile radio systems including at least one receiver device of the above kind.

Other objects and features of the present invention will become apparent on reading the following description of one embodiment of the invention given with reference to the accompanying drawings, in which:

- Figure 1 summarizes the principle of spectrum spreading,
- Figure 2 shows one example of a transmitter device for a code distribution multiple access mobile radio system using a matching method in accordance with the invention, and
- Figure 3 shows one example of a receiver device for a code distribution multiple access mobile radio system using a matching method in accordance with the invention.

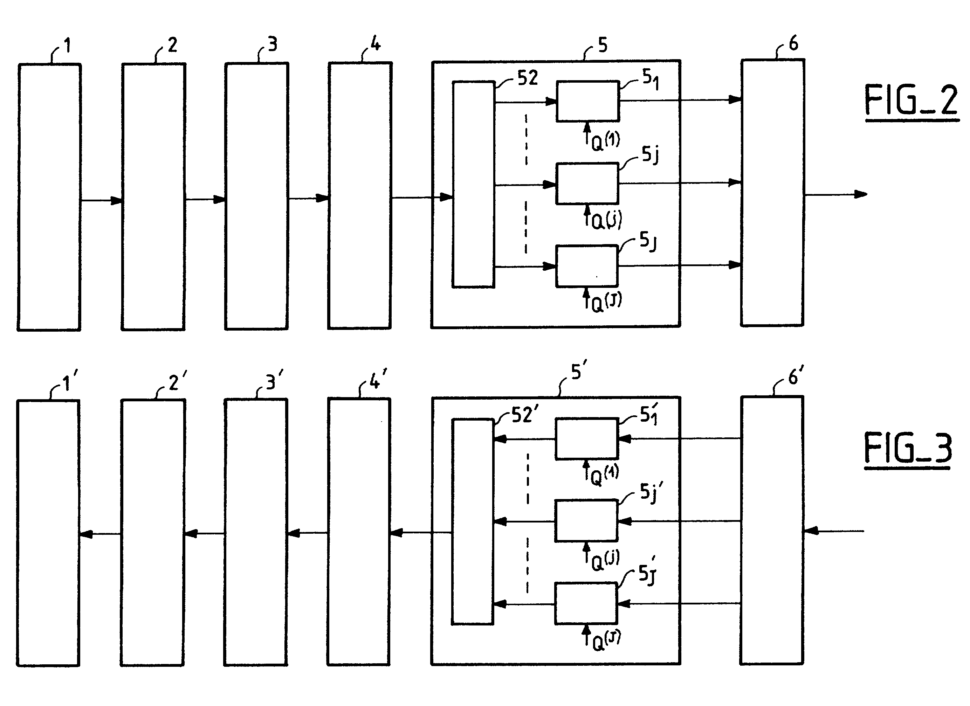

As shown in Figure 2, a transmitter device for a spreading code division multiple access mobile radio system includes:

- means 1 for generating sequences or frames of data to be transmitted from payload data (speech, data, pictures, etc.) and additional data such as signaling data in particular,
- error correction encoding means 2 receiving said sequences and introducing redundancy so that the bit rate at the output at said error correction encoding means is equal to R/$\rho$c, where R is the bit rate received by the encoding means and $\rho$c is the efficiency of the encoding concerned (with $0 < \rho c \leq 1$),
- means 3 for repeating or eliminating bits at the output of the error correction encoding means 2, the resulting bit rate being expressed in the form R/$\rho$c $\rho$r, where $\rho$r is the repetition or elimination rate,
- means 4 for regrouping bits into symbols, before modulation, in the case of multistate modulation, whereby a plurality of data bits can be transmitted during the same basic period or symbol period, the symbol bit rate then obtained being expressed in the form R/$\rho$c $\rho$r m, where $\underline{m}$ is an integer designating the number of data bits transmitted in this way within the same symbol,
- spreading means 5 for spreading the symbols obtained in this way, and
- modulator and transmitter means 6.

The receiver device shown in Figure 3 generally comprises means executing functions which are the converse of those shown in Figure 2, namely:

- receiver and demodulator means 6',
- despreading means 5' for despreading the symbols received by an operation which is the converse of that executed by the means 5,
- means 4' for breaking the symbols down into bits by an operation that is the converse of that executed by the means 4,

- means 3' for executing an operation that is the converse of the repeating or eliminating operation executed by the means 3,
- error correcting decoding means 2' executing an operation which is the converse of that executed by the means 2, and
- means 1' for restoring the payload data and the signaling data by an operation that is the converse of that executed by the means 1.

Other means, in particular interleaving means and de-interleaving means, not shown, can be provided, the parameters ρc and ρr then being simplified notations depending on other parameters that are not explained here.

Resources required are expressed in terms of the parameters R, ρc, ρr and m in the form:

$$\frac{R}{\rho_c \rho_r m}$$

In accordance with the invention, the method of matching required resources and allocated resources includes the allocation of one or more spreading codes, the number and the length of those spreading codes, and in the case of a plurality of spreading codes, the mode of distribution of the various symbols of a sequence of symbols to be spread, respectively despread, between the spreading codes being determined so that resources allocated are matched optimally to resources required.

By way of example, Figures 2 and 3 correspond to the case in which the method in accordance with the invention of matching required resources and allocated resources includes the allocation of a plurality of spreading codes. The number of codes allocated is denoted J and the length of each of those codes is denoted $Q^{(j)}$ (with j = 1, ... J).

The mode of distributing the various symbols of a sequence of symbols to be spread, respectively despread, between these spreading codes depends on various factors, such as:

- the fraction of symbols of the sequence applied to each code of length $Q^{(j)}$, this fraction being denoted $p_j$, the sum

$$\sum_{j=1}^{J} p_j$$

being of course equal to 1,

- for given fractions $p_j$, the mode of application of the various symbols of the sequence to these codes, namely spreading (respectively despreading) simultaneously more or fewer successive symbols of the sequence, for example spreading (respectively despreading), the successive symbols of the sequence, either alternately or in groups of two, three, etc., or any other combination, produce the required fractions. The various symbols can then be transmitted in any manner, and in particular a plurality of symbols can be transmitted simultaneously. This mode of application will be characterized hereinafter by a parameter $\underline{a}$ such that the bit rate at the radio interface increases with the value of $\underline{a}$.

Each symbol transmitted is therefore spread, respectively despread, by a single allocated code, possibly allocated at the same time as other symbols. This implies in particular that at any time between 0 and J codes can be used simultaneously (the number 0 corresponding to when the discontinuous transmission technique previously referred to is to be used).

The parameter $\underline{a}$ therefore takes into account the fact that at any time a plurality of symbols can be spread and transmitted simultaneously or, to the contrary, transmission can be stopped temporarily (if the discontinuous transmission technique is to be used).

Accordingly, in accordance with the invention, the spreading means 5 include means such as the means $5_1, ...5_j, ...5_J$ to perform spreading by means of respective spreading codes of length $Q^{(1)}, ...Q^{(j)}, ...Q^{(J)}$, and distributor means 52 receiving the sequence to be spread and distributing it, in accordance with said mode of distribution, between different means such as the means $5_1, ...5_j, ...5_J$.

Similarly, despreading means 5' include means $5_1', ...5_j', ...5_J'$ and 52' executing functions which are the converse of those executed by means $5_1, ...5_j, ...5_J$ and 52.

In other words, according to the invention, resources allocated are expressed in the form:

$$a \frac{R_c}{\sum_{j=1}^{J} P_j Q^{(j)}}$$

as a function of the parameters J, $Q^{(j)}$, of the distribution mode (in this instance the parameters $p_j$ and $\underline{a}$) and the bit rate $R_c$ of the spread symbols (or "chip" bit rate).

Matching resources allocated and resources required seeks to obtain the condition:

$$\frac{R}{\rho_c \rho_r m} \;=\; a \frac{R_c}{\sum\limits_{j=1}^{J} P_j Q^{(j)}}$$

In accordance with the invention, the parameters J, $Q^{(j)}$ and the distribution mode (in this instance the parameters $p_j$ and $\underline{a}$) are determined so that resources allocated are matched optimally to resources required.

Clearly there is a multitude of possible combinations of the parameters J, $Q^{(j)}$, $p_j$ and $\underline{a}$ for a given value of all the other parameters and a multitude of ways to spread the symbols to be transmitted by means of these codes that comply with the previous constraints, and clearly it is not possible to describe here all possible examples and situations.

Generally speaking, and also in accordance with the invention, it is nevertheless worth pointing out that transmission performance can be improved by choosing the highest possible value of the parameter $\underline{a}$ and/or the shortest possible length $Q^{(j)}$ of the codes, i. e. more generally by reducing the sum

$$\frac{1}{a} \sum_{j=1}^{J} p j Q^{(j)}$$

(of course within the limits of what can be done without penalizing other users).

Choosing the highest possible number J of codes allocated (subject to the same limits) optimizes transmission performance.

Further, if only one code is allocated, a sufficiently short code length is chosen (within the same limits) to authorize an optimum error correction encoding rate for a given payload bit rate.

Also, codes can be allocated at the beginning of a call or at any time during a call (the codes allocated can, for example, be shared in the time domain between a plurality of users).

Also, the distribution mode can change during a call.

The parameters for fixing resources required can also be determined so that resources required are matched optimally to resources allocated. In the example shown in Figures 2 and 3, such matching can be obtained by operating on one or more of the parameters R, $\rho_c$, $\rho_r$ and m.

The means 1 to 4 and 1' to 4' can be conventional means and therefore do not need to be described in detail here.

The means as $5_1$, ...$5_j$, ...$5_J$ and $5_1'$, ...$5_j'$, ...$5_J'$ can equally be conventional means and do not need to be described in detail here.

The practical implementation of the means 52 and 52' will be evident to the skilled person and so these means do not need to be described in more detail here other than by reference to their function.

The means 6 and 6' can be conventional means, except that the means 6 may have to be adapted to receive the symbols delivered to the outputs of the means $5_1$, ...$5_j$, ...$5_J$ (i.e. possibly to include as many modulator and transmitter subsystems as necessary), and similarly the means 6' may have to be adapted to deliver symbols to the means as $5_1$, ...$5_j$, ...$5_J$ (i.e. possibly to include as many receiver and demodulator subsystems as necessary).

Transmitter or receiver devices like those shown in Figures 2 and 3 can be used in mobile stations and in base transceiver stations of mobile radio systems.

## Claims

1. Method of matching resources required and resources allocated in a spreading code division multiple access mobile radio system, characterized in that it includes allocation of one or more spreading codes, the number (J) and the length ($Q^{(j)}$) of said spreading codes, and in the case of a plurality of allocated spreading codes, the mode of distribution of the various symbols of a sequence to be spread, respectively despread, between said spreading codes being determined so that resources allocated are matched optimally to resources required.

2. Method according to claim 1, characterized in that the number (J) of spreading codes allocated is chosen to be as high as possible and/or the length ($Q^{(j)}$) of said spreading codes is chosen to be as low as possible, so as additionally to optimize transmission performance.

3. Method according to claim 2, characterized in that said distribution mode is defined by the fraction ($p_j$) of symbols of a sequence of symbols to be spread, respectively despread, applied to each of said spreading codes.

4. A method according to claim 3, characterized in that said distribution mode is further defined, for given fractions of symbols, by the mode of application of the various symbols of said sequence to said spreading codes, to obtain said fractions of symbols.

5. A method according to claim 4, characterized in that said mode of application is chosen so as additionally to optimize transmission performance.

6. A method according to any one of claims 1 to 5, characterized in that one or more of the parameters for fixing resources required are also determined so that resources required are matched optimally to resources allocated.

7. A method according to claim 6, characterized in that said parameters include:

   - the bit rate (R) of payload data to be transmitted,
   - the efficiency ($\rho_c$) of the error correction encoding,
   - the efficiency ($\rho_r$) of repetition or elimination of data after error correction encoding, and
   - the number ($\underline{m}$) of data bits transmitted per symbol.

8. A transmitter device for a spreading code division multiple access mobile radio system, for implementing the method of any one of claims 1 to 7, characterized in that it includes spreading means ($5_1$, ...$5_j$, ...$5_J$) using a plurality of spreading codes and means (52) for distributing symbols from a sequence of symbols to be spread between said spreading codes in accordance with a given distribution mode, the number (J) and the length ($Q^{(j)}$) of said spreading codes and said distribution mode being determined so that resources allocated are matched optimally to resources required.

9. A receiver device for a spreading code division multiple access mobile radio system for implementing the method according to any one of claims 1 to 7, characterized in that it includes despreading means ($5_1'$, ...$5_j'$, ...$5_J'$) using a plurality of spreading codes and means for distributing symbols from a sequence of symbols to be despread between said spreading codes, in accordance with a given distribution mode, the number (J) and the length ($Q^{(j)}$) of said spreading codes and said distribution mode being determined so that resources allocated are matched optimally to resources required.

10. A mobile station for spreading code division multiple access mobile radio systems, including a transmitter device according to claim 8.

11. A mobile station for spreading code division multiple access mobile radio systems, including a receiver device according to claim 9.

12. An entity, in particular base transceiver station, for spreading code division multiple access mobile radio systems, including a transmitter device according to claim 8.

13. An entity, in particular base transceiver station, for spreading code division multiple access mobile radio systems, including a receiver device according to claim 9.

# FIG_1

FIG_2

FIG_3

**European Patent Office**

**EUROPEAN SEARCH REPORT**

Application Number

EP 99 40 0903

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 40592 A (ERICSSON TELEFON AB L M) 30 October 1997 (1997-10-30) * abstract * * page 8, line 1 - page 9, line 14 * * page 10, line 9 - page 11, line 4 * | 1-3,6 | H04J13/00 H04J11/00 H04B7/26 |
| A | * page 12, line 13 - page 13, line 14 * | 4,7-12 | |
| X | LIU Z ET AL: "A DEMAND-ASSIGNMENT ACCESS CONTROL FOR MULTI-CODE DS-CDMA WIRELESS PACKET (ATM) NETWORKS" PROCEEDINGS OF IEEE INFOCOM 1996. CONFERENCE ON COMPUTER COMMUNICATIONS, FIFTEENTH ANNUAL JOINT CONFERENCE OF THE IEEE COMPUTER AND COMMUNICATIONS SOCIETIES. NETWORKING THE NEXT GENERATION SAN FRANCISCO, MAR. 24 - 28, 1996, vol. 2, no. CONF. 15, 24 March 1996 (1996-03-24), pages 713-721, XP000621338 INSTITUTE OF ELECTRICAL AND ELECTRONICS ENGINEERSISBN: 0-8186-7293-5 * abstract * | 1-3,6 | |
| A | * partie 2 * | 4,7-12 | H04J H04B |
| X | US 5 442 625 A (GITLIN RICHARD DENNIS ET AL) 15 August 1995 (1995-08-15) * abstract * * column 1, line 13 - line 25 * | 1-3,6 | |
| A | * column 3, line 7 - line 51 * | 4,7-12 | |

-/--

The present search report has been drawn up for all claims

| Place of search | Date of completion of the search | Examiner |
|---|---|---|
| THE HAGUE | 18 August 1999 | Chauvet, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## EUROPEAN SEARCH REPORT

European Patent Office

Application Number

EP 99 40 0903

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FONG M -H ET AL: "LINE RATE(S) SELECTION FOR CELLULAR DS-CDMA SYSTEMS WITH INTEGRATED TRAFFIC" GLOBECOM '95. IEEE GLOBAL TELECOMMUNICATIONS CONFERENCE, SINGAPORE, NOV. 14 - 16, 1995, vol. 3, 14 November 1995 (1995-11-14), pages 1809-1813, XP000633601 INSTITUTE OF ELECTRICAL AND ELECTRONICS ENGINEERSISBN: 0-7803-2510-9 * abstract * * partie 3.2 * | 2,7-12 | |
| P,X | WO 99 14878 A (QUALCOMM INC) 25 March 1999 (1999-03-25) * abstract * * page 8, line 9 - page 14, line 31 * | 1-6,8-12 | |

TECHNICAL FIELDS SEARCHED (Int.Cl.7)

The present search report has been drawn up for all claims

| Place of search | Date of completion of the search | Examiner |
|---|---|---|
| THE HAGUE | 18 August 1999 | Chauvet, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 40 0903

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-1999

| Patent document cited in search report | | Publication date | Patent family member(s) | | Publication date |
|---|---|---|---|---|---|
| WO 9740592 | A | 30-10-1997 | US | 5896368 A | 20-04-1999 |
| | | | AU | 2718397 A | 12-11-1997 |
| | | | CA | 2252382 A | 30-10-1997 |
| | | | EP | 0895675 A | 10-02-1999 |
| US 5442625 | A | 15-08-1995 | CA | 2145708 A | 14-11-1995 |
| | | | EP | 0682423 A | 15-11-1995 |
| | | | JP | 8065273 A | 08-03-1996 |
| | | | US | 5856971 A | 05-01-1999 |
| WO 9914878 | A | 25-03-1999 | AU | 9569398 A | 05-04-1999 |